# EUROPEAN PATENT APPLICATION

(11) **EP 2 566 013 A1**
(43) Date of publication of application: **06.03.2013**
(21) Application number: 11179875.7
(22) Date of filing: 02.09.2011
(51) Int. Cl.: H02K 3/50, H02K 7/18, H02K 15/00

(54) **Generator**

(71) Applicant: SIEMENS AKTIENGESELLSCHAFT, 80333 München (DE)
(72) Inventor: Le Besnerais, Jean, 59370 Mons en Baroeul (FR)

(57) **Abstract**

Generator (1), particularly for a wind turbine (2), comprising a rotor (4) and a stator (5), with the stator (5) comprising a stator yoke (7) having a number of axially extending stator windings (9) ending in respective end windings (12), whereby three circumferentially adjacently disposed stator windings (9) build a respective set of stator windings (A, B, C), wherein, regarding a respective set of stator windings (A, B, C), in relation to an axial centre axis (22) of the generator (1) first end windings (12a) perpendicularly extend off the stator yoke (7) in radially outward direction, second end windings (12b) extend off the stator yoke (7) in axial direction, and third end windings (12c) perpendicularly extend off the stator yoke (7) in radially inward direction at at least one face side of the generator (1).

## Description

The invention relates to a generator, particularly for a wind turbine, comprising a rotor and a stator, with the stator comprising a stator yoke having a number of axially extending stator windings ending in respective end windings, whereby three circumferentially adjacently disposed stator windings build a respective set of stator windings.

In known manner, electric machines such as generators or electric motors convert mechanical energy into electric energy or vice versa. During operation of respective electric machines thermal losses may occur which may reduce efficiency or even lead to damages.

Regarding a conventional generator, thermal or copper losses regularly have to be encountered in the region of the end or overhang windings, i.e. respective sections of stator windings axially extending off the stator yoke. That is, the design of the end or overhang windings is regularly not optimised regarding respective thermal losses.

Thermal losses may also be based on demagnetisation effects of permanent magnets of the rotor due to short circuits, high temperature, etc. since respective demagnetisation effects usually lead to an increase of stator currents. Thus, respective demagnetised permanent magnets have to be replaced which is oftentimes related to cumbersome and costly maintenance works.

Thus, it is the object of the invention to provide an improved generator, particularly regarding the design of the end windings as well as serviceability.

This is inventively achieved by a generator as initially described, wherein, regarding a respective set of stator windings, in relation to an axial centre axis of the generator, first end windings perpendicularly extend off the stator yoke in radially outward direction, second end windings extend off the stator yoke in axial direction, and third end windings perpendicularly extend off the stator yoke in radially inward direction at at least one face side of the generator.

The inventive principle suggests a novel design of respective end windings, i.e. respective sections of stator windings extending off the stator yoke. The stator windings are separately received in respective axial slots of the stator yoke, i.e. each slot receives a single stator winding. Thereby, with respect to a centre axis of the generator or stator respective end windings may either perpendicularly extend off the stator yoke in radially outward direction (first end windings), extend off the stator yoke in axial direction (second end windings), or perpendicularly extend off the stator yoke in radially inward direction (third end windings). Preferably, the respective first, second and third end windings are circumferentially arranged in alternating manner, i.e. respective first end windings are preferably neighbouring second or third end windings in circumferentially direction, respective second end windings are preferably neighbouring first or third end windings in circumferentially direction, and respective third end windings are preferably neighbouring first or second end windings in circumferentially direction.

For a better understanding of the concrete design of the respective end windings, theoretically dividing the respective end windings in respective sections may be helpful. In such a manner, respective end windings comprise a first section directly leaving the stator yoke, a respective, essentially u-shaped, second section following the first section, and a third section re-entering into the stator yoke following the second section.

Hence, the second section is disposed in between a respective first and third section so that a second section interconnects a respective first section with a respective third section, or vice versa. The second section may also be understood as the free end of a respective end winding. First and third sections usually have the same shape and/or orientation.

Regarding respective first end windings, the first section is bent in radial outward direction, so that the second section essentially extends in radial and circumferential direction, i.e. the opening of the "U" faces in radial inward direction. The third section is bent analogous to the first section since the first and third sections correspond in shape and orientation. Hence, the first end windings appear as an inversed "U" when axially looking at a respective face side of the stator.

Regarding respective second end windings, the first section extends in axial direction, the second section shares the same radial plane as the first section and essentially extends in circumferential direction. The third section has the same orientation as the first section, i.e. also extends in axial direction. Hence, the second end windings appear as an "U" when radially looking at the outer or inner diameter of the stator.

Regarding respective third end windings, the first section is bent in radial inward direction so that the second section essentially extends in radial direction, i.e. the opening of the "U" faces in radial outward direction. The third section is bent analogous to the first section since the first and third sections correspond in shape and orientation. Hence, the first end windings appear as a regular "U" when axially looking at a respective face side of the stator.

The inventive design of respective end windings may be denoted as -90°/0°/+90° or +90°/0°/-90°, respectively.

Thereby, the numbers indicate the angle or bending angle of the end windings relative to the axial centre axis of the generator, i.e. +90°/-90° means perpendicularly extending in radial outward or inward direction relative to the centre axis and 0° means extending in parallel to the centre axis.

The inventive design of end windings may be provided on both or either on one face side of the stator or generator, respectively.

As will be seen with exemplary embodiments of the invention, the inventive design of end windings provides circumferentially regularly arranged insertion slots between respective circumferentially neighbouring first or third end windings, which allow an axial insertion of respective components of the rotor such as particularly permanent magnets.

Each respective stator winding is related to a specific current phase. Relating to a three-phase generator, each set of stator windings comprises three stator windings differing in current phase. Thus, the inventive principle assures that the respective different phases have the same electrical resistance leading to balanced currents. The inventive principle is based on a one slot per phase arrangement, with each stator slot receiving one stator winding.

Generally, the inventive principle is both applicable for generators having an outer rotor - inner stator configuration as well as generators having an outer stator - inner rotor configuration.

Both the rotor and stator of the generator may be segmented in respective, particularly ring-segment-like shaped, rotor segments and stator segments, respectively.

It is preferred that respective sets of stator windings are circumferentially repeatedly disposed in adjacently first, second and third sets of stator windings, whereby each set of stator windings comprises differently circumferentially arranged first, second, and third end windings. Hence, when denoting first sets of stator windings with "A", second sets of stator windings with "B", and third sets of stator windings with "C" respective first (A), second (B), and third (C) sets of stator windings are adjacently disposed in circumferential direction according to the principle ABC, ABC, ABC, etc. The respective first (A), second (B), and third (C) sets of stator windings each contain three respective stator windings. The end windings of the stator windings of the respective sets of stator windings differ in their orientation, i.e. their arrangement or respective first, second and third end windings.

According to a preferred embodiment, respective sets of stator windings are circumferentially repeatedly disposed in adjacent first, second, and third sets of stator windings, whereby a first set of stator windings has a configuration of first end windings followed by second end windings followed by third end windings, a second set of stator windings being adjacently disposed to the first set of stator windings has a configuration of second end windings followed by third end windings followed by first end windings, and a third set of stator windings being adjacently disposed to the second set of stator windings has a configuration of third end windings followed by first end windings followed by second end windings. Hence, according to this embodiment, the circumferential arrangement of respective first (1), second (2), and third (3) end windings of respective first (A), second (B), and third (C) sets of stator windings is A:123, B:231, C:312, A:123, B:231, C:312, etc.

Of course, diverse other arrangements of respective first (1), second (2), and third (3) end windings of respective first (A), second (B), and third (C) sets of stator windings are possible. The following is a non-terminatory listing of respective examples.
A:132, B:231, C:321, A:132, B:231, C:321, etc.
A:321, B:123, C:132, A:321, B:123, C:132, etc.
A:312, B:123, C:312, A:312, B:123, C:312, etc.

Generally, regarding a respective group of first (A), second (B), and third (C) sets of stator windings, it is preferred, that the circumferential gap between respective first (1) or third (3) end windings, i.e. the gap between respective first (1) end windings and circumferentially following or successive first (1) end windings extends about more than three axial slots of the stator yoke, whereby - as mentioned above - each slot receives respective a single stator winding. As can be seen in the above mentioned examples, there is always a distance of four respective stator slots between the first (1) or third (3) end windings of the respective first (A) and second (B) sets of stator windings.

It is possible that the radial dimensions of first or third end windings exceed the radial dimensions of an air-gap between the rotor and stator. This allows an axially compact design of the stator and generator as a whole since the respective first and third end windings extend in radial direction, merely the second end windings extend in axial direction.

The rotor may comprise a rotor frame supporting the rotor, with the rotor frame comprising a radial extending section, whereby respectively orientated sets of end windings are only built on the axial face side of the stator that is turned away from the radially extending section of the rotor frame. Hence, as mentioned above, the inventive design of respective end windings may only be applied to a single or both face sides of the stator. Thereby, it is preferred that the inventive design of respective end windings is only applied to the non-drive end of the generator. As far as the generator is provided as a power generating unit of a wind turbine, the non-drive end is defined as the respective side of the generator turned away from the rotor hub, whereas the drive end of the generator is defined as the respective side of the generator facing the rotor hub.

It is of advantage when the rotor comprises axially extending receiving sections, particularly recesses, whereby a respective receiving section is adapted to at least partially receive at least one permanent magnet or at least one base plate supporting at least on permanent magnet. The receiving sections may be provided as axial slots, grooves or the like. The cross-section of a respective receiving section is adapted to the cross-section of a respective component of the rotor, i.e. a permanent magnet or a respective base plate supporting at least one permanent magnet. Hence, respective components of the rotor easily fit or may be easily inserted in respective receiving section in axial direction.

The rotor may comprise at least one radially extending projection abutting the axial end of a respective receiving section. The radial extending projection may be deemed as a stop or blocking element defining a respective axial position of the free ending of an inserted or to be inserted component of the rotor. Preferably, the respective radially extending projection is disposed at an axial position corresponding to a face side of the rotor.

It is advisable that one face side of a permanent magnet of the rotor comprises at least one handle means. The handle means facilitates handling of a respective permanent magnet, i.e. axially inserting or taking out respective permanent magnets from the rotor, i.e. particularly respective axially extending receiving sections. A respective handle means is preferably detachably connectable to a corresponding connection means of a hoisting means.

Aside, the invention relates to a wind turbine, particularly a direct drive wind turbine, comprising a generator as described above. The wind turbine may be an offshore-wind turbine.

Further, the invention relates to a method for mounting or demounting of a generator, particularly a generator as described above. The method comprises the steps of providing a generator having circumferentially insertion slots for inserting respective components of the rotor, particularly permanent magnets of the rotor, with the insertion slots being provided by building sets of stator windings, with each set of stator windings comprising three circumferentially adjacently disposed stator windings in a first step. Regarding a respective set of stator windings, in relation to an axial centre axis of the generator, first end windings perpendicularly extend off the stator yoke in radially outward direction, second end windings extend off the stator yoke in axial direction, and third end windings perpendicularly extend off the stator yoke in radially inward direction at at least one face side of the generator.

The second step refers to axially inserting at least one respective component of the rotor from the face side of the generator through a respective insertion slot or axially removing at least one respective component of the rotor through a respective insertion slot.

The inventive method allows easy mounting or demounting of respective components of the rotor, particularly permanent magnets, whereby the respective components of the rotor are axially inserted or taken out from the rotor through respective circumferentially extending insertion slots built by the inventive design of respective end windings. Thereby, the insertion slots offer sufficient space to insert respective components of the generator, particularly permanent magnets of the rotor.

It is possible that before inserting the at least one component of the rotor, the stator is mounted to a structural component of the generator. Hence, a firm and mechanically stable connection of the stator with the generator is provided before inserting the at least one component of the rotor which is particularly of advantage when respective permanent magnets of the rotor have to be installed since magnetic interactions between the rotor and the stator giving rise to respective structural stresses of the generator may be reduced.

Thereby, it is preferred that at least one spacer element is inserted in an air-gap between the stator and the rotor after mounting the stator to the structural component of the generator. Respective spacer elements are adapted to keep or alter the air-gap between the rotor and the stator during mounting or demounting of the generator. Hence, structural stresses of the generator based on magnetic interactions between the permanent magnets of the rotor and the stator may be reduced.

A rotor brake disc may be mounted to the rotor after inserting of the components of the rotor has been completed. Hence, this may be deemed as the last step of mounting a respective generator, since the radially extending brake disc inhibits inserting or taking out respective components of the rotor in axial direction. Likewise, demounting a respective brake disc is the first step when removing or replacing of respective components of the rotor.

The invention is described in detail as reference is made to the principle figures, whereby:
- Fig. 1: shows a cut view of an inventive generator disposed within a wind turbine;
- Fig. 2: shows an enlarged view of the detail in fig. 1;
- Fig. 3: shows a perspective view of a respective set of stator windings; and
- Fig. 4, 5: show two exemplary schemes of the circumferential arrangement of respective end windings.

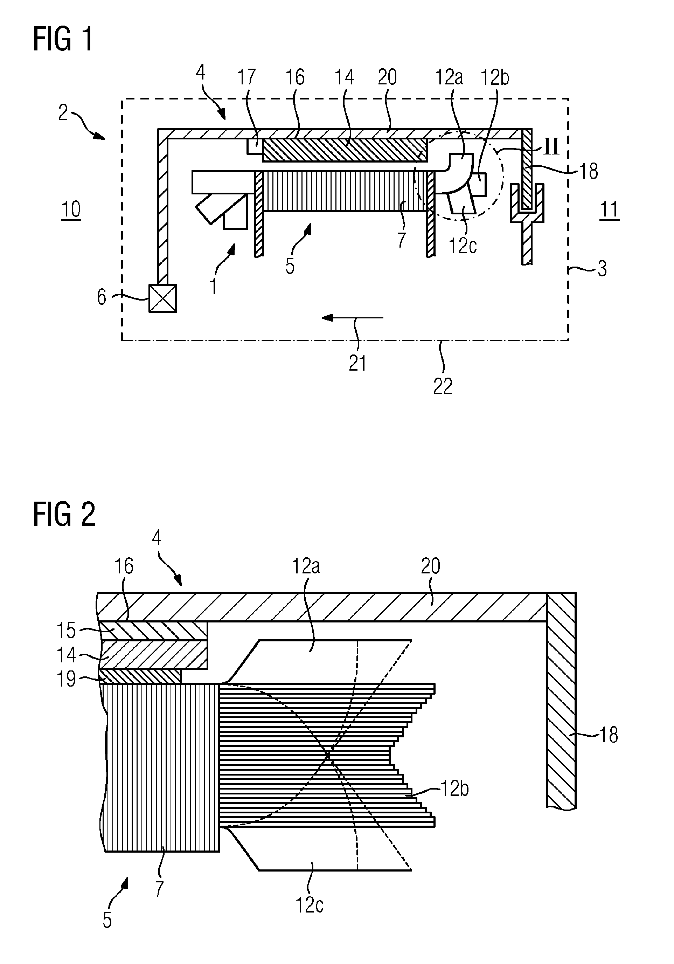

Fig. 1 shows a principle cut view of an inventive generator 1 disposed within a wind turbine 2, i.e. the nacelle 3 of the wind turbine 2. The wind turbine 2 is a direct drive wind turbine. The generator 1 serves as the power generating unit of the wind turbine 2.

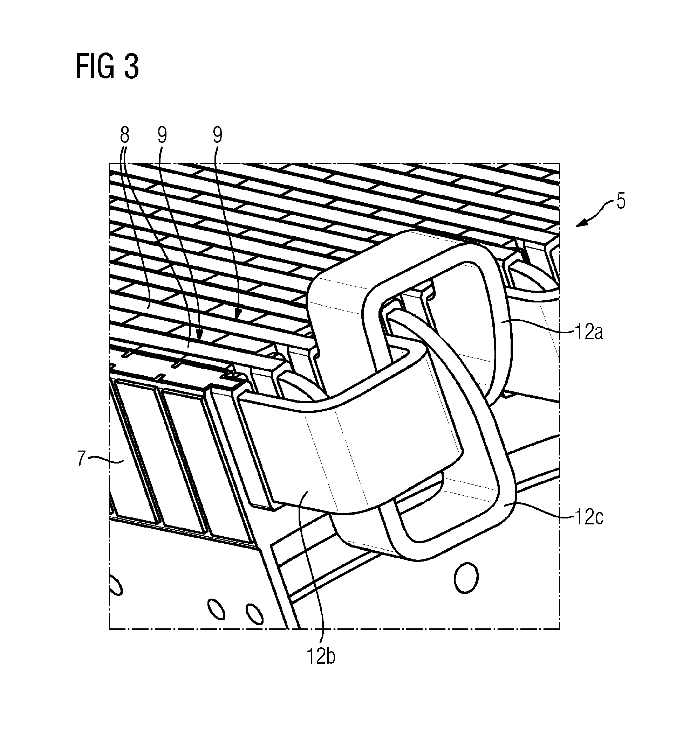

In known manner, the generator 1 comprises a rotor 4 and a stator 5 with the rotor 4 being rotatably supported relative to the stator 5 by means of respective bearings 6. The stator 5 comprises a stator yoke 7 consisting of a number of axially aligned metal plates (not shown) building a number of circumferentially uniformly aligned axial slots 8 (cf. fig. 3). Each slot 8 receives or accommodates stator windings 9. Thereby, a configuration of one slot 8 per pole and per phase is provided, i.e. circumferentially neighbouring stator windings 9 differ in their current phase.

As can be seen from fig. 2, the radial dimensions of the first end windings 12a exceed the radial dimensions of the air-gap between the rotor 4, i.e. the permanent magnets 14 of the rotor 4, and the stator 5.

The rotor 4, i.e. a rotor frame 20 comprises axially extending receiving sections in the shape of axially extending recesses 16. A respective recess 16 is adapted to at least partially receive one permanent magnet 14 or a respective permanent magnet 14 attached to a base plate 15. Hence, respective permanent magnets 14 may be easily inserted or taken out from respective recesses 16 in axial direction. Thereby, it is of advantage that respective permanent magnets 14 comprise a handling means (not shown) facilitating axial movements of the permanent magnets 14 within the recesses 16.

As can be seen from fig. 1, the rotor frame 20 comprises a radially extending projection 17 abutting the axial end of a respective receiving section, i.e. a respective recess 16. The projection 17 serves as a blocking or stopping means inhibiting axial movements of respective permanent magnets 14. Hence, a permanent magnet 14 axially abuts the projection 17 when completely inserted.

The generator 1 has a drive end 10, i.e. the left side of the generator 1 and a non-drive end 11, i.e. the right side of the generator 1. The drive end 10 faces the rotor hub (not shown) of the wind turbine 2, whereas the non-drive end 11 is turned away from the rotor hub of the wind turbine 2.

As is discernible, the configuration or orientation respectively of respective end windings 12 (or overhang windings) is different at the drive end 10 in comparison to the non-drive end 11. The configuration of respective end windings 12 extending off the stator yoke 7 at the drive end 10 is 0°/-45°/-90° with respect to an axial centre axis 22 of the generator 1.

The inventive principle is explained with reference to the respective end windings 11 extending off the stator yoke 7 at the non-drive end 11 of the generator 1. As can be seen, the respective end windings 12 are configured in a 90°/0°/-90° arrangement with respect to an axial centre axis 22 of the generator 1 (cf. also figs. 2, 3).

The inventive principle is best to understand when theoretically grouping three circumferentially adjacently disposed stator windings 9 to a respective set of stator windings A, B, C. Hence, each set of stator windings A, B, C comprises three circumferentially adjacently disposed stator windings 9. Regarding a respective set of stator windings A, B, C as shown in fig. 3 for instance, first end windings 12a perpendicularly extend off the stator yoke 7 in radial outward direction, second end windings 12b extend off the stator yoke 7 in axial direction, and third end windings 12c perpendicularly extend off the stator yoke 7 in radial inward direction with respect to the centre axis 22 of the generator 1.

In such a manner, different phases always have the same electrical resistance so that balanced currents may be assured. Aside, a circumferential gap 13 is built in between respective circumferentially successive first or third end windings 12a, 12b of adjacently disposed sets of stator windings A, B. As will be explained later, the circumferential gap 13 is ready to accommodate respective components of the rotor 4, i.e. particularly permanent magnets 14, of the rotor 4. The permanent magnets 14 are preferably attached to a base plate 15.

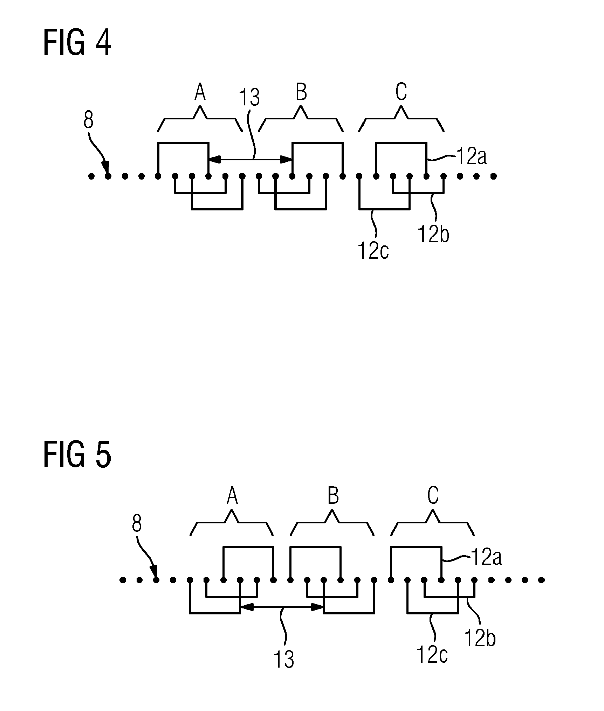

As can be seen in fig. 4, 5 respective sets of stator windings A, B, C are circumferentially repeatedly disposed in according to ABC, ABC, etc. Each respective set of stator windings A, B, C comprises differently circumferentially arranged first, second, and third end windings 12. Again, first end windings are denoted as 12 a, second end windings are denoted as 12b, and third end windings are denoted as 12c. Slots 8 of the stator yoke 7 are schematically depicted as points.

Fig. 4 shows a scheme of three respective sets of circumferentially repeatedly disposed first, second, and third sets of stator windings A, B, C. Thereby, the first set of stator windings A, i.e. the respective set of stator windings on the left, has a configuration of first end windings 12a followed by second end windings 12b followed by third end windings 12c. The second set of stator windings B is adjacently disposed to the first set of stator windings A. The second set of stator windings B has a configuration of second end windings 12b followed by third end windings 12c followed by first end windings 12a. The third set of stator windings C is adjacently disposed to the second set of stator windings B. The configuration of the third set of stator windings C is third end windings 12c followed by first end windings 12a followed by second end windings 12b.

As can be seen, a circumferential gap 13 is built between respective first end windings 12a of respective circumferentially neighbouring sets of stator windings A, B. The circumferential gap 13 extends along a distance of four respective stator slots 8. Hence, the gap 13 is sufficiently wide so that inserting or removing of respective components of the rotor 4 such as the permanent magnets 14 for instance is easily feasible.

The same applies to the configuration of respective first, second, and third end windings 12a, 12b, 12c as shown in fig. 5. Thereby, the first set of stator windings A has a configuration of third end windings 12c, followed by second end windings 12b, followed by first end windings 12b. A second set of stator windings B being adjacently disposed to the first set of stator windings A has a configuration of first end windings 12a followed by second end windings 12b followed by third end windings 12c. A third set of stator windings C being adjacently disposed to the second set of stator windings B has a configuration of first end windings 12a followed by third end windings 12c followed by second end windings 12b. Again, a respective circumferential gap 13 circumferentially extending along four successive slots 8 is built between respective third end winding 12c of the first set of stator windings A and the second set of stator windings B.

In either case, each set of stator windings A, B, C comprises differently circumferentially arranged first, second, and third end windings 12a, 12b, 12c.

The inventive principle also refers to a method for mounting or demounting of a generator 1 comprising the steps of providing a respective generator as shown in fig. 1-3. The generator 1 has circumferentially disposed insertion slots (cf. gaps 13) built by the inventive configuration of respective end windings 12 at the non-drive end 11 of a generator 1. The insertion slots, i.e. the gaps 13 are built by building sets of stator windings A, B, C, with each set of stator windings A, B, C comprising three circumferentially adjacently disposed stator windings 9. Thereby, regarding a respective set of stator windings A, B, C first end windings 11a perpendicularly extend off the stator yoke 7 in radially outward direction, second end windings 12b extend off the stator yoke in axial direction, and third end windings 12c perpendicularly extend off the stator yoke 7 in radially inward direction with reference to a centre axis 22 of the generator 1.

The inventive method allows an axial insertion (cf. arrow 21) of at least one respective component of the rotor 4 from the non-drive end 11 of the generator 1 through a respective insertion slot or gap 13, respectively. Alternatively, an axial removing of at least one respective component of the rotor 4 through the respective insertion slots or gaps 13 is possible (cf. arrow 21).

Of course, mounting or demounting of the generator is performed when the generator 1 is in a service position and not operating, i. e. the rotor 4 is locked against rotation.

It is preferred that when mounting the generator 1, initially the rotor 4 is installed without permanent magnets 14 and afterwards, the assembled stator 5 is inserted within the rotor 4 (cold marriage). Thereby, a radially extending brake disc 18 is not yet installed. Spacer elements 19 are inserted in the air-gap between the stator 5 and the rotor 4 after mounting the stator 4 to a structural component of the generator 1 such as a non-rotating main shaft or the like. The spacer elements 19 prevent radial movements due to magnetic interactions between the rotor 4 and the stator 5.

Hence, inserting of permanent magnets 14 or removing of demagnetised permanent magnets 14 is easily feasible, whereby in the latter case electromagnetic interactions should be comparatively low, so that removal of respective demagnetised permanent magnets 14 may be easily performed.

All in all, the inventive principle provides a high efficiency of the generator 1 due to lower overhang losses as well as higher serviceability due to the possibility of axially inserting or replacing respective components of the rotor 4.

Although the present invention has been described in detail with reference to the preferred embodiment, the present invention is not limited by the disclosed examples from which the skilled person is able to derive other variations without departing from the scope of the invention.

## Claims

1. Generator (1), particularly for a wind turbine (2), comprising a rotor (4) and a stator (5), with the stator (5) comprising a stator yoke (7) having a number of axially extending stator windings (9) ending in respective end windings (12), whereby three circumferentially adjacently disposed stator windings (9) build a respective set of stator windings (A, B, C), wherein, regarding a respective set of stator windings (A, B, C), in relation to an axial centre axis (22) of the generator (1) first end windings (12a) perpendicularly extend off the stator yoke (7) in radially outward direction, second end windings (12b) extend off the stator yoke (7) in axial direction, and third end windings (12c) perpendicularly extend off the stator yoke (7) in radially inward direction at at least one face side of the generator (1).

2. Generator according to claim 1, wherein respective sets of stator windings (A, B, C) are circumferentially repeatedly disposed in adjacent first, second, and third sets of stator windings (A, B, C), whereby each set of stator windings (A, B, C) comprise differently circumferentially arranged first, second, and third end windings (12a, 12b, 12c).

3. Generator according to claim 2, wherein respective sets of stator windings (A, B, C) are circumferentially repeatedly disposed in adjacent first, second, and third sets of stator windings (A, B, C), whereby
- a first set of stator windings (A) has a configuration of first end windings (12a) followed by second end windings (12b) followed by third end windings (12c),
- a second set of stator windings (B) being adjacently disposed to the first set of stator windings (A) has a configuration of second end windings (12b) followed by third end windings (12c) followed by first end windings (12a), and
- a third set of stator windings (C) being adjacently disposed to the second set of stator windings (A) has a configuration of third end windings (12c) followed by first end windings (12a) followed by second end windings (12b).

4. Generator according to one of the preceding claims, wherein the radial dimensions of first or third end windings (12a, 12c) exceed the radial dimensions of an air-gap between the rotor (4) and stator (5).

5. Generator according to one of the preceding claims, wherein the rotor (4) comprises a rotor frame (20) supporting the rotor (4), with the rotor frame (20) comprising a radially extending section, whereby respectively orientated sets of end windings (12a, 12b, 12c) are only built on the face side of the stator (5) that is turned away from the radially extending section of the rotor frame (20).

6. Generator according to one of the preceding claims, wherein the rotor (4) comprises axially extending receiving sections, particularly recesses (16), whereby a respective receiving section is adapted to at least partially receive at least one permanent magnet (14) or at least one base plate (15) supporting at least one permanent magnet (14).

7. Generator according to claim 6, wherein the rotor comprises at least one radially extending projection (17) abutting the axial end of a respective receiving section.

8. Generator according to one of the preceding claims, wherein one face side of a permanent magnet (14) of the rotor (4) comprises at least one handle means.

9. Wind turbine (2), particularly direct drive wind turbine, comprising a generator (1) according to one of the preceding claims.

10. Method for mounting or demounting of a generator (1), particularly the generator (1) according to one of the preceding claims, comprising the steps of:
- providing a generator (1) having circumferentially insertion slots (13) for inserting respective components of the rotor (4), particularly permanent magnets (14) of the rotor (4), with the insertion slots (13) being provided by building sets of stator windings (A, B, C), with each set of stator windings (A, B, C) comprising three circumferentially adjacently disposed stator windings (9), whereby, regarding a respective set of stator windings (A, B, C), in relation to an axial centre axis (22) of the generator (1) first end windings (12a) perpendicularly extend off the stator yoke (7) in radially outward direction, second end windings (12b) extend off the stator yoke (7) in axial direction, and third end windings (12c) perpendicularly extend off the stator yoke (7) in radially inward direction at at least one face side of the generator (1),
- axially inserting at least one respective component of the rotor (4) from the face side of the generator (1) through a respective insertion slot (13) or
- axially removing at least one respective component of the rotor (4) through a respective insertion slot (13).

11. Method according to claim 10, wherein before inserting the at least one component of the rotor (4), the stator (5) is mounted to a structural component of the generator (1).

12. Method according to claim 11, wherein at least one spacer element (19) is inserted in an air-gap between the stator (5) and the rotor (4) after mounting the stator (4) to the structural component of the generator (1).

13. Method according to one of the claims 10 to 12, wherein a rotor brake disc (18) is mounted to the rotor (4) after inserting of the components of the rotor (4) is completed.
